# EUROPÄISCHE PATENTANMELDUNG

(11) **EP 0 782 918 A2**
(43) Veröffentlichungstag der Anmeldung: **09.07.1997**
(21) Anmeldenummer: 96114702.2
(22) Anmeldetag: 13.09.1996
(51) Int. Cl.: B32B 31/12, B29C 63/02

(54) **Sichtkaschierung mit Thermokleber**

(30) Priorität: 12.12.1995 DE 19546272
(71) Anmelder: Billhöfer Maschinenfabrik GmbH, D-90449 Nürnberg (DE)
(72) Erfinder: Bartsch, Peter, 90559 Burgthann-Unterferrieden (DE); Müller, Hans-Josef, 92224 Amberg (DE)
(74) Vertreter: Matschkur, Götz, Lindner Patent- und Rechtsanwälte

(57) **Zusammenfassung**

Sichtkaschierung zum Zwecke der Oberflächenveredelung von Druck- und anderen Erzeugnissen durch Aufbringen von Kaschierfolien (F) mittels eines 100%-Klebstoffsystems, bei dem die kleberbeschichtete Kaschierfolie mittels einer beheizten Kaschierwalze auf das Erzeugnis aufkaschiert wird, wobei unmittelbar vor der Kaschierwalze (12) auf die Kaschierfolie mittels einer geheizten Breitschlitzdüse (9) ein thermoplastischer Klebstoff aufgebracht wird, und Vorrichtung zur Erzeugung der Sichtkaschierung.

## Beschreibung

Die Erfindung bezieht sich auf eine Sichtkaschierung zum Zwecke der Oberflächenveredelung von Druck- und anderen Erzeugnissen durch Aufbringen von Kaschierfolien mittels eines 100%-Klebstoffsystems, bei dem die kleberbeschichtete Kaschierfolie mittels einer beheizten Kaschierwalze auf das Erzeugnis aufkaschiert wird, sowie eine Vorrichtung zur Erzeugung einer solchen Sichtkaschierung.

Es sind bereits eine ganze Vielzahl unterschiedlicher Systeme zur Sichtkaschierung bekannt geworden, die sich in der Praxis mehr oder weniger bewährt haben. Neben der Verwendung lösemittelhaltiger Folienlaminierklebstoffe, bei denen über eine Tauchwalze mit Rakelwerk der Klebstoff auf die Kaschierfolie oder das zu kaschierende Produkt aufgebracht wurde, sind auch bereits ebenfalls naß zu verarbeitende Dispersions-Folienlaminierklebstoffe eingesetzt worden. Beide Systeme haben aber keine oder allenfalls bedingte Zukunftschancen, da lösemittelhaltige Klebstoffe aus Umweltschutzgründen in absehbarer Zeit völlig verboten werden und Dispersions-Folienlaminierklebestoffe zwar den EU-Abluftverordnungen entsprechen, jedoch den Nachteil besitzen, daß sie höhere Auftragsmengen benötigen, daß gewisse Verarbeitungsprobleme auftreten, daß es Schwierigkeiten mit gewissen Druckgütern gibt und daß neben einem erhöhten Energieverbrauch insbesondere längere Reinigungszeiten erforderlich sind, um nach einem Maschinenstillstand eine Kaschieranlage wieder einsatzbereit zu machen.

Darüber hinaus sind auch bereits sog. Solventless Folienlaminierklebstoffe eingesetzt worden, meist in Form flüssiger Polyurethane, die durch Luftfeuchtigkeit oder Feuchtigkeit des Druckguts aktiviert werden. Eine direkt anschließende Weiterverarbeitung ist nicht möglich, da die Reaktion Kleber/Feuchte nicht unmittelbar nach dem Kaschiervorgang abgeschlossen ist. Wegen der darin enthaltenen Isocyanate sind solche Klebstoffe aber umweltschädlich und die damit behandelten Produkte müssen als Sondermüll entsorgt werden. Hinzu kommt, daß durch die Aktivierung über die Luftfeuchtigkeit der Kleber immer wieder fest wird, so daß ein erhöhter Reinigungsaufwand erforderlich ist. Der Vorteil solcher lösungsmittelfreier Folienlaminierklebstoffe, nämlich daß es sich um ein 100%-System handelt, d.h. daß keine zusätzlichen Lösungsmittel außer dem eigentlichen Kleber verwendet werden und nur eine geringe Auftragsmenge notwendig ist, und daß darüber hinaus auch ein hoher Glanz erzielt werden kann, läßt sich also wegen der Nachteile nicht befriedigent ausnutzen.

Entsprechend das gleiche gilt auch für die UV-härtenden Folienlaminierklebstoffe, bei denen es sich ebenfalls wieder um 100%-Systeme handelt. Derartige UV-härtende Klebstoffe können mit einem geringen Auftrag und ohne Verluste verarbeitet werden, ermöglichen hohe Bandgeschwindigkeit. UV-verarbeitende Maschinen müssen jedoch sehr sorgfältig gereinigt werden und mit UV-Licht-undurchlässigen Schutzeinrichtungen versehen sein, da verbleibende Klebstoffreste sonst auspolymerisieren können und dies zu langwierigem Reinigen der Anlagenteile führt. Der Nachteil solcher UV-härtender Klebstoffe für die Sichtkaschierung mit Hilfe von Kaschierfolien ist aber, daß sie zum einen für primäre Lebensmittelverpackungen nicht zulässig sind, daß immer ein gewisser Restgeruch übrigbleibt, der in vielen Fällen sehr störend oder gar völlig unzulässig ist, daß es mit gewissen Druckgütern Probleme gibt und daß mehr Kontrolle notwendig ist (UV-Strahler, Aushärtung, Druckgut usw.).

Ein besonders häufig eingesetztes Kaschiersystem ist das, bei dem Thermofolien zur Laminierung eingesetzt werden. In diesem Fall sind die Folien herstellerseits bereits mit einer Kleberbeschichtung versehen. Es bedarf lediglich des Zusammenfahrens der beschichteten Folien mit dem zu kaschierenden Druckgut od.dgl., um über eine Thermokalanderwalze die Kaschierung zu erreichen. Dies bedeutet, daß geringe Maschineninvestitionen erforderlich sind, daß keine Klebstofflagerung und keine Klebstoffentsorgung erforderlich ist, ebensowenig wie der Klebstoffauftrag. Daraus ergeben sich kürzere Rüstzeiten, geringe Reinigungsprobleme und eine sofortige Weiterverarbeitbarkeit der kaschierten Produkte.

Der Nachteil einer solchen Thermofolien-Laminierung besteht in der Lagerhaltung von mehreren Folientypen in allen Breiten, einer schlechten Wärmestandfestigkeit und Abreiß-Schwierigkeiten. Hinzu kommt neben Randbeschnittabfall, der wegen der teuren Thermofolien beträchtliche Kosten verursacht, die Schwierigkeit, daß bei Planlage von Papieren das Papiermaterial über ein Messer gebrochen werden muß, wodurch sich Probleme mit der Druckrückseite ergeben. Schließlich ergibt sich bei vielen Folienrollen eine Faltenbildung an den Rändern, deren Ursache bisher nicht beseitigt werden konnte. Schließlich aber ist besonders nachteilig der sehr hohe Preis.

Der Erfindung liegt daher die Aufgabe zugrunde, eine Sichtkaschierung zu schaffen, die bei einfacher Verarbeitbarkeit und geringen Kosten eine hohe Standfestigkeit mit optimalen Glanzeigenschaften verbindet, eine sofortige Weiterverarbeitung gestattet und darüber hinaus möglichst geringe Reinigungsarbeiten erfordert.

Zur Lösung dieser Aufgabe ist erfindungsgemäß vorgesehen, daß unmittelbar vor der Kaschierwalze auf die Kaschierfolie mittels einer geheizten Breitschlitzdüse ein thermoplastischer Klebstoff aufgebracht wird, wobei die Klebstoffolie vor der Breitschlitzdüse vorzugsweise auf eine vorgebbare Temperatur gekühlt oder insbesondere erwärmt wird.

Die erfindungsgemäße Kaschierung unter Verwendung thermoplastischer Klebstoffe ermöglicht, speziell in Verbindung mit der geheizten Breitschlitzdüse, klar definierte geringe Auftragsmengen von 0,5 bis 20 g/m², wobei praktisch keine Schwankungen der vorgegebenen Auftragsmengen bei Änderung der Produktionsgeschwindigkeit oder Viskositätsschwankungen des Klebers auftreten.

Von besonderer Bedeutung ist dabei die Art der Vorrichtung, mit der die Sichtkaschierung erzielt wird, die in Weiterbildung der Erfindung dadurch gekennzeichnet ist, daß eine Breitschlitzdüse, die in an sich bekannter Weise über einen beheizbaren Zuführschlauch mit einem Klebstoffbehälter mit Schmelzeinrichtung verbunden ist und eine Düsenvorkammer mit Dosierpumpen aufweist, zwischen einem kühl- oder heizbaren Folienabzugskalander mit Gegendruckwalze und einer vorzugsweise gummierten Zugwalze, zwischen denen die Kaschierfolie auf einer von der Abzugsspannung von einer Vorratsrolle unabhängigen einstellbaren Zugspannung gehaltert ist, die Kaschierfolie tangiert, vorzugsweise unter leichter Umschlingung eintaucht.

Die Art des Anstehens der Breitschlitzdüse an der Kaschierfolie - wobei die Breitschlitzdüse bevorzugt um die Austrittsöffnung des Klebstoffs feststellbar verschwenkbar sein soll - kann in verschiedener Weise erfolgen. Zum einen ist es möglich, daß die Breitschlitzdüse zwischen zwei eng benachbarten leichtlaufenden Gegendruckwalzen an der Kaschierfolie ansteht, wobei durch mehr oder weniger starkes Andrücken auch das Maß der gewünschten Umschlingung sich verändern läßt und damit eine Veränderung des Kleberauftrags möglich ist. Alternativ dazu kann auch vorgesehen sein, daß die Breitschlitzdüse über einer festen Unterstützung mit flexibler Auflage auf der Kaschierfolie aufliegt, wobei die Rückstellkraft der Unterlage auf die gesamte Breite der Folienbahn einen gleichmäßigen Andruck zwischen Folie und Düsenaustrittsöffnung ergibt.

Der Vorteil des erfindungsgemäßen Kaschierverfahrens ergibt sich in vollem Ausmaß dann, wenn die Breitschlitzdüse eine Segmentbreitschlitzdüse mit Breitenabschaltung und absolut steuerbarer Klebstoff-Auftragsmenge ist.

Die Zugwalze kann gleichlaufend, bevorzugt aber mit einer Voreilung von 3 - 10% gegenüber dem Folienabzugskalander, geregelt angetrieben werden, um über eine Regelungsvorrichtung mit einer Bahnzug-Meßwalze eine konstante Folienspannung unter der Auftragsvorrichtung zu gewährleisten.

In Ausgestaltung der Erfindung kann vorgesehen sein, daß der Zugwalze und der Kaschierwalze eine Breitstreckwalze zwischengeordnet ist, in die eine Bahnzugmeßwalze integriert sein kann. Eine solche Bahnzugmeßwalze kann allerdings auch separat vor der Breitstreckwalze angeordnet sein.

Eine besonders vorteilhafte Antriebsart, die eine zweckmäßige Regelung auch bei wechselnden Folienbahngeschwindigkeiten ermöglicht, ergibt sich gemäß einem weiteren Merkmal der Erfindung dadurch, daß der Folienabzugskalander über ein von der Kaschierwalze angetriebenes Überlagerungsgetriebe mit vorzugsweise einem AC-Servomotor oder einem anderen, den Regelgenauigkeiten entsprechenden Antriebssystem nach Maßgabe des voreinstellbaren Bahnzugs der Kaschierfolie angetrieben wird. Somit ist gewährleistet, daß eine gewünschte, einmal eingegebene Bahnspannung zwischen Abzugswalze und Kaschierwalze unabhängig von der Arbeitsgeschwindigkeit und anderen Einflußgrößen konstant bleibt.

Neben der weiteren Möglichkeit, dem Folienabzugskalander ebenfalls eine Breitstreckwalze vorzuschalten, können schließlich auch noch zwischen der Vorratsrolle, auf der die Kaschierfolie angeliefert wird, und dem Abzugskalander, bzw. der ihm vorgeschalteten Breitstreckwalze, schrägstellbare Folienleitwalzen angeordnet sein.

Weitere Vorteile, Merkmale und Einzelheiten der Erfindung ergeben sich aus der nachfolgenden Beschreibung eines Ausführungsbeispiels sowie anhand der schematischen Zeichnung, die einen Schnitt durch eine erfindungsgemäße Sichtkaschiervorrichtung zeigt.

In der Folienabwicklung wird die Vorratsrolle 1 so eingehängt, daß die vorbehandelte Folienseite (herstellerseitige Vorbehandlung) bei der Beschichtung zur Auftragseinrichtung hin zeigt. Der Folienzug wird mittels Bremse konstantgehalten. Bei 2 und 3 sind Folienleitwalzen angedeutet, wobei die Schrägstellung der Folienleitwalze 2 bevorzugt an der Bedienseite der Maschine und die Schrägstellung der Folienleitwalze 3 an der gegenüberliegenden Maschinenseite erfolgt. Mittels entsprechender Leitwalzeneinstellung können Wickelfehler der Folienrollen (konkav-, konvex- oder einseitig schräggewickelt) ausgeglichen und die Folienbahn auf ihrer gesamten Breite bei gleichen Spannungsverhältnissen der Maschine zugeführt werden. Über die Folienleitwalze 4 gelangt die abgezogene Kaschierfolie zur Breitstreckwalze 5, die ein faltenfreies Auflaufen der Folienbahn F auf den Abzugskalander sicherstellt.

Der Abzugskalander besteht aus der temperierbaren Abzugswalze 7 und der gummierten Gegendruckwalze 6, die an- und abstellbar ist und deren Anpreßkraft an die Abzugswalze 7 variierbar ist. Je nach Folientyp ist die Abzugswalze kühl- oder heizbar, um einer Faltenbildung unter der Auftragseinrichtung entgegenzuwirken. In der Regel wird die Abzugswalze 7 jedoch aufgeheizt, um die stabil darübergeführte Folienbahn spannungsarm auf die Klebstofftemperatur vorzuwarmen. Der Abzugskalander bewirkt das Abziehen und den Transport der Folienbahn von der Folienabwicklung bis hin zur Auftragseinrichtung unter gleichbleibender Spannung und einen faltenfreien Einlauf auf die Leitwalzen 8 der gezeigten Folienstabilisierung.

Diese Folienstabilisierung besteht im dargestellten Ausführungsbeispiel aus zwei leichtlaufenden Leitwalzen, die in minimalem Abstand zueinander angeordnet sind. Diese Leitwalzen bewirken eine Versteifung der unter der Breitschlitzdüse 9 der Auftragsvorrichtung durchgeführten Folienbahn. Diese weist in diesem Bereich durch vor- und nachgeschaltete Einrichtungen über die gesamte Bahnbreite konstante Spannungsverhältnisse auf. Je nach Folien-, Klebstoffart oder Düsenform kann die Auftragsdüse die Folienbahn tangieren oder zwischen den Leitwalzen eintauchen, um eine Umschlingung der Düse zu bewirken.

Die Klebstoffauftragseinrichtung, die an sich bekannt ist und deshalb im einzelnen nicht näher dargestellt werden soll, besteht aus folgenden Komponenten:
a) Klebstoffbehälter mit Schmelzeinrichtung,
b) beheizbarer Zuführschlauch
c) Düsenvorkammer mit Dosierpumpen (Zwangsförderer)
d) Segmentbreitschlitzdüse 9 mit Breitenabschaltung
e) Regelelektronik

Der aufgeschmolzene Klebstoff wird mittels Förderpumpe über den Heizschlauch in die Dosierpumpen gefördert, so daß der Förderraum der Dosierpumpen stets blasenfrei mit Klebstoff befüllt ist. Die Dosierpumpen fördern eine definierte Menge Klebstoff in das Verteilersystem der Düsenvorkammer. Von dort gelangt der Klebstoff in die der jeweiligen Dosierpumpe zugeordneten Segmente der Breitschlitzdüse und wird an deren Austrittsöffnung auf die Folienbahn gestrichen. Der durch Verringerung der max. Arbeitsbreite zuviel geförderte Klebstoff wird in den Tank zurückgefördert, so daß sich keine stehenden Klebstoffnester bilden, in denen der Klebstoff thermisch geschädigt werden könnte. In sämtlichen Komponenten a-d wird der Klebstoff auf die ideale Verarbeitungstemperatur geheizt und die Temperatur ständig überwacht. Es ist ebenso möglich, in den einzelnen Komponenten a-d unterschiedliche Temperaturen einzustellen. Die Auftragsdüse kann um die Austrittsöffnung des Klebstoffes (Doppelpfeil P) geschwenkt werden, um einen optimalen Streichwinkel zur Folienbahn einzustellen. Die Auftragsmenge (g/m²) kann in der Steuerung als Absolutwert eingegeben werden und bleibt während der gesamten Produktion, auch bei Geschwindigkeitsänderung, konstant.

Die gummierte Zugwalze ist so angeordnet, daß sie von der Folie leicht umschlungen ist. Sie ist angetrieben und läuft im Gleichlauf zum Abzugskalander 6, 7, kann jedoch auch auf Voreilung (3 - 10% zu 7) umgestellt werden. Sie wirkt im Zusammenspiel mit der Kaschierwalze 12 und der Bahnzug-Meßwalze 11 und hat eine konstante Folienspannung, unter der Auftragsvorrichtung 9, zur Folge.

Mit der Breitstreckwalze 11 wird ein faltenfreies Auflaufen der Folienbahn auf die Kaschierwalze 12 sichergestellt. Gleichzeitig übernimmt die integrierte Bahnzugmessung (der Bahnzug kann auch mit einer separaten Meßwalze vor der Breitstreckwalze gemessen werden) die Ansteuerung eines vorzugsweise AC-Servomotors oder eines anderen, den Regelgenauigkeiten entsprechenden Antriebgssystems an einem Überlagerungsgetriebe, das die Abzugswalze 7 antreibt. Das Überlappungsgetriebe selbst wird von der Kaschierwalze 12 angetrieben. Somit ist gewährleistet, daß eine gewünschte, einmal eingegebene Bahnspannung zwischen Abzugswalze 7 und Kaschierwalze 12 unabhängig von der Arbeitsgeschwindigkeit und anderen Einflußgrößen konstant bleibt.

Die Kaschierwalze kann von 20°C bis 140°C stufenlos beheizt werden. Die erforderliche Temperatur ergibt sich aus den idealen Klebstoffverarbeitungstemperaturen. Beim Auflauf der kleberbeschichteten Folienbahn auf die Kaschierwalze wird der als geschlossener Film aufgetragene Klebstoff angeschmolzen und mit der Gegenkraft der Gegendruckwalze auf das zulaufende Papier aufkaschiert. Je nach Maschinentyp und Arbeitsgeschwindigkeit liegt der Durchmesser zwischen 200 und 450 mm.

Die gummierte Gegendruckwalze 13 wird mittels Hydraulik mit 5000 - 60000 N gegen die Kaschierwalze 12 gedrückt. Dabei entsteht eine "Nippfläche", die zu einer längeren Anlagezeit des längs des Pfeiles 14 antransportierten zu kaschierenden Materials in Form einer Bahn oder einzelner geschuppter Bögen führt. Hierdurch wird eine gute Verklebung zwischen Papier und Folie erreicht. Weiterhin findet eine Glättung leichter Rillen im Klebstoffauftrag statt. Ergebnis ist eine hochglänzende Kaschierung ohne Klebstoffverquetschung. Der Abtransport des kaschierten Gutes erfolgt längs des Pfeiles 15.

Die Erfindung ist nicht auf das dargestellte Ausführungsbeispiel beschränkt. So könnte u.a., wie bereits eingangs erwähnt wurde, die Folienstabilisierung unter der Breitschlitzdüse 9 auch dadurch erfolgen, daß eine feste Unterstützung mit flexibler Auflage vorgesehen ist, wobei die Auftragsdüse in diesem Fall die Folienbahn mindestens auf die flexible Unterlage drückt. Die Rückstellkraft der Unterlage ergibt auf die gesamte Breite der Folienbahn einen gleichmäßigen Andruck zwischen Folie und Düsenaustrittsöffnung.

Durch das erfindungsgemäße Kaschierverfahren ergeben sich folgende Vorteile:
1) von 0,5-20 g/m² variable klar definierte Auftragsmengen
2) keine Schwankungen der vorgegebenen Auftragsmengen bei Änderung der Produktionsgeschwindigkeit oder Viskositätsschwankung des Klebers
3) keine entstehende, mit Lösemitteln versetzte Abluft
4) geringer Energiebedarf
5) sofortige Weiterverarbeitbarkeit des Produktes (Schneiden/Prägen/Nuten/Rillen etc)
6) extreme Anfangshaftung des Verbundes
7) geringer Reinigungsaufwand an der Auftragseinrichtung (nur Ein- und Ausschalten von Heizung und Pumpe) verbunden mit geringem Klebstoffverlust (da im System befindlicher Klebstoff reaktionierbar ist) (nur Ein- und Ausschalten von Heizung und Pumpe)
8) keine Entsorgungsprobleme von Klebstoffresten
9) definierte Festlegung der Kaschierqualität (Glanz)
10) absolute Transparenz der Kleberschicht
11) bisher auf dem Markt befindliche Folientypen finden Verwendung.

Als Folientypen können eingesetzt werden: OPP-Folien, Polyester-Folien, Acetat-Folien, PE-Folien, Struktur-Folien oder Nylon-Folien. Darüber hinaus können ohne Umbau der Anlage ebenso z.B. Papier, Textil und sonstige Materialbahnen verklebt werden, wobei dann jeweils entsprechende geeignete Klebstoffe eingesetzt werden müssen. Bei dem verwendeten Kleber handelt es sich um einen thermoplastischen Klebstoff, dessen Verarbeitungstemperatur vorzugsweise zwischen 90 und 120°C liegt. Nach dem Kaschiervorgang hat dieser Klebstoff vollständig abgebunden und weist keine Restklebrigkeit auf.

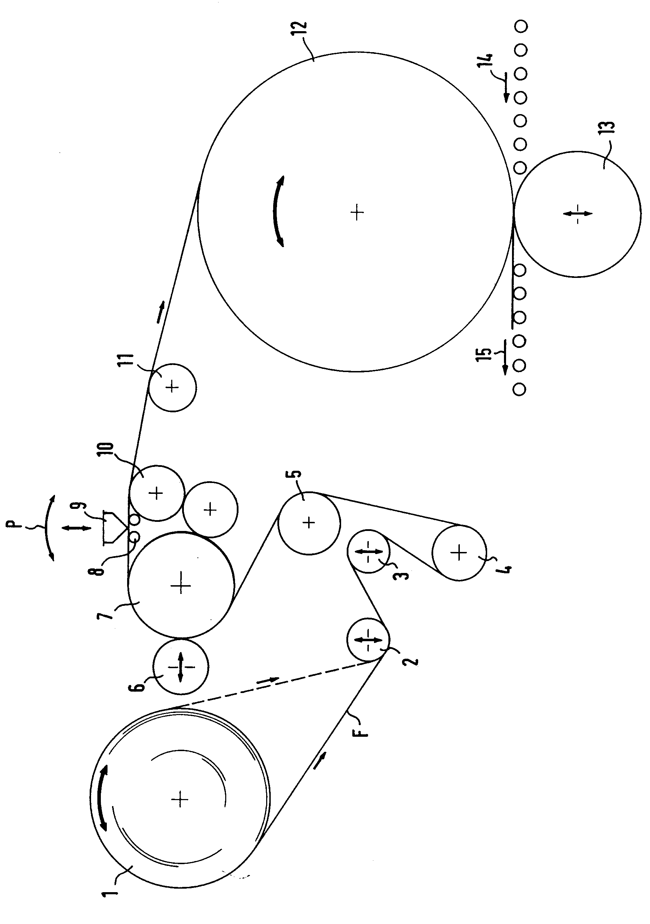

## Patentansprüche

1. Sichtkaschierung zum Zwecke der Oberflächenveredelung von Druck- und anderen Erzeugnissen durch Aufbringen von Kaschierfolien mittels eines 100%-Klebstoffsystems, bei dem die kleberbeschichtete Kaschierfolie mittels einer beheizten Kaschierwalze auf das Erzeugnis aufkaschiert wird, dadurch gekennzeichnet, daß unmittelbar vor der Kaschierwalze (12) auf die Kaschierfolie (F) mittels einer geheizten Breitschlitzdüse (9) ein thermoplastischer Klebstoff aufgebracht wird.

2. Sichtkaschierung nach Anspruch 1, dadurch gekennzeichnet, daß die Kaschierfolie (F) vor der Breitschlitzdüse (9) auf eine vorgebbare Temperatur gekühlt oder vorzugsweise erwärmt wird.

3. Vorrichtung zur Erzeugung der Sichtkaschierung nach Anspruch 1 oder 2, dadurch gekennzeichnet, daß eine Breitschlitzdüse (9), die in an sich bekannter Weise über einen beheizbaren Zuführschlauch mit einem Klebstoffbehälter mit Schmelzeinrichtung verbunden ist und eine Düsenvorkammer mit Dosierpumpen aufweist, zwischen einem kühl- oder heizbaren Folienabzugskalander (7) mit Gegendruckwalze (6) und einer vorzugsweise gummierten Zugwalze (10), zwischen denen die Kaschierfolie (F) auf einer von der Abzugsspannung von einer Vorratsrolle (1) unabhängigen einstellbaren Zugspannung gehalten ist, die Kaschierfolie (F) tangiert, vorzugsweise unter leichter Umschlingung eintaucht.

4. Vorrichtung nach Anspruch 3, dadurch gekennzeichnet, daß die Breitschlitzdüse (9) zwischen zwei eng benachbarten leichtlaufenden Gegendruckwalzen (8) an der Kaschierfolie (F) ansteht.

5. Vorrichtung nach Anspruch 3, dadurch gekennzeichnet, daß die Breitschlitzdüse (9) über einer festen Unterstützung mit flexibler Auflage auf der Kaschierfolie (F) aufliegt.

6. Vorrichtung nach einem der Ansprüche 3 bis 5, dadurch gekennzeichnet, daß die Breitschlitzdüse (9) um die Austrittsöffnung des Klebstoffs feststellbar verschwenkbar ist (Pfeil P).

7. Vorrichtung nach einem der Ansprüche 3 bis 6, dadurch gekennzeichnet, daß die Breitschlitzdüse (9) eine Segmentbreitschlitzdüse mit Breitenabschaltung und absolut steuerbarer Klebstoff-Auftragsmenge ist.

8. Vorrichtung nach einem der Ansprüche 3 bis 7, dadurch gekennzeichnet, daß die Zugwalze (10) gleichlaufend, vorzugsweise mit einer Voreilung von 3 - 10% gegenüber dem Folienabzugskalander (7), geregelt antreibbar ist.

9. Vorrichtung nach einem der Ansprüche 3 bis 8, dadurch gekennzeichnet, daß der Zugwalze (10) und der Kaschierwalze (12) eine Breitstreckwalze (11) zwischengeordnet ist.

10. Vorrichtung nach einem der Ansprüche 3 bis 9, dadurch gekennzeichnet, daß der Folienabzugskalander (7) über ein von der Kaschierwalze (12) angetriebenes Überlagerungsgetriebe mit vorzugsweise einem AC-Servomotor oder einem anderen, den Regelgenauigkeiten entsprechenden Antriebssystem nach Maßgabe des voreinstellbaren Bahnzugs der Kaschierfolie (F) angetrieben wird.

11. Vorrichtung nach Anspruch 10, dadurch gekennzeichnet, daß eine Bahnzugmeßwalze vor der Breitstreckwalze (11) angeordnet ist.

12. Vorrichtung nach Anspruch 10, dadurch gekennzeichnet, daß die Bahnzugmeßwalze in die Breitstreckwalze (11) integriert ist.

13. Vorrichtung nach einem der Ansprüche 3 bis 12, dadurch gekennzeichnet, daß dem Folienabzugskalander (7) eine Breitstreckwalze (5) vorgeschaltet ist.

14. Vorrichtung nach einem der Ansprüche 1 bis 13, dadurch gekennzeichnet, daß zwischen der Vorratsrolle (1) und dem Abzugskalander (7), bzw. der ihm vorgeschalteten Breitstreckwalze (5), schrägstellbare Folienleitwalzen (2, 3) angeordnet sind.
